# EUROPEAN PATENT SPECIFICATION

(11) **EP 1 701 556 B1**
(45) Date of publication and mention of the grant of the patent: **09.04.2008**
(21) Application number: 05005167.1
(22) Date of filing: 09.03.2005
(51) Int. Cl.: H04Q 3/00

(54) **SS7 point code sharing at MTP level 3**
SS7-Punktkodeteilen in MTP-Stufe 3
Partage de code de point SS7 au niveau MTP 3

(43) Date of publication of application: 13.09.2006
(73) Proprietor: Nokia Siemens Networks GmbH & Co. KG, 81541 München (DE)
(72) Inventor: Angermayr, Manfred, 86529 Schrobenhausen (DE); Schwarzbauer, Hanns Jürgen, Dr., 82194 Gröbenzell (DE)

(56) References cited:
- WO-A-20/04077732
- US-B1- 6 327 260

## Description

The present invention relates to an optimized method, apparatus and network arrangement for handling signaling messages in a communications network. More particularly, the present invention relates to an optimized method, apparatus and network arrangement for point code sharing at MTP level 3 and transparently introducing network elements in a SS7 network.

Modern communications networks generally carry two types of traffic or data. The first is the traffic which is transmitted by or delivered to a user or subscriber, and which is usually paid for by the user. That type of traffic is widely known as user traffic or subscriber traffic. The second is the traffic caused by network management applications in sending and receiving management data from network elements, known as management traffic.

In telecommunications, the management traffic is also known as signaling traffic. The term "signaling" refers to the exchange of signaling messages between various network elements such as database servers, local exchanges, transit exchanges and user terminals. A well known protocol for transferring such signaling messages is the Signaling System 7 (SS7), also referred to as Common Channel Signaling System 7 (CCS7).

The Signaling System 7 as specified by the International Telecommunication Union (ITU) in the Q.700-series Recommendations provides for all signaling tasks in today's telecommunications networks. More specifically, SS7 provides for example for:
- basic call setup, management, and tear down;
- enhanced call features such as call forwarding, calling party name/number display, and three-way calling;
- accounting and billing;
- database operations for services such as authentication, roaming, toll-free and special tariff services, and number portability;
- network management for the SS7 network and its connections; and
- non-call related signaling, allowing for services such as short message service (SMS), ISDN Supplementary Services and user-to-user signaling (UUS).

The Signaling System 7 forms an independent network in which SS7 messages are exchanged between network elements over bidirectional channels called signaling links. Signaling occurs out-of-band on dedicated channels rather than in-band on channels reserved for user traffic such as voice. Compared to in-band signaling, out-of-band signaling provides:
- faster call setup times;
- more efficient use of voice circuits; and
- support for Intelligent Network (IN) services which require signaling to network elements without voice trunks (e.g., database systems).

The elements of a SS7 network are known as signaling points, each uniquely identified by a signaling point code. Point codes are carried in signaling messages exchanged between signaling points to identify the source and destination of each message. Each signaling point uses a routing table to select the appropriate signaling path for each message.

There are essentially three kinds of signaling points in a SS7 network: Service Switching Points (SSPs), Signaling Transfer Points (STPs), and Service Control Points (SCPs).

SSPs are switches that originate, terminate, or tandem calls. An SSP sends signaling messages to other SSPs to setup, manage, and release voice circuits required to complete a call. An SSP may also send a query message to a centralized database (an SCP) to determine how to route a call (e.g., a toll-free call). An SCP sends a response to the originating SSP containing the routing number(s) associated with the dialed number.

Network traffic between signaling points may be routed via signaling transfer points (STPs). An STP routes each incoming message to an outgoing signaling link based on routing information contained in the SS7 message. Because it acts as a network hub, an STP provides improved utilization of the SS7 network by eliminating the need for direct links between signaling points. An STP may perform global title translation, a procedure by which the destination signaling point is determined from digits present in the signaling message (e.g., the dialed 800 number, calling card number, or mobile subscriber identification number).

Signaling in a SS7 network may occur in either of two configurations: associated signaling wherein the signaling points are direct neighbors and communicate directly via SS7 links; or quasi-associated signaling wherein signaling between two nodes occurs via one or more STP.

Associated signaling allows for a maximum of 16 signaling links between the neighboring network elements. This limit may be overcome by providing a pair of signaling transfer points in the path between those network elements, thereby choosing quasi-associated signaling instead. Each STP may support 16 signaling links, thereby allowing a maximum of 32 signaling links between said network elements. Having two signaling transfer points further allows multiple routes between the network elements and therefore the introduction of a pair of signaling transfer points provides resiliency against single STP failures.

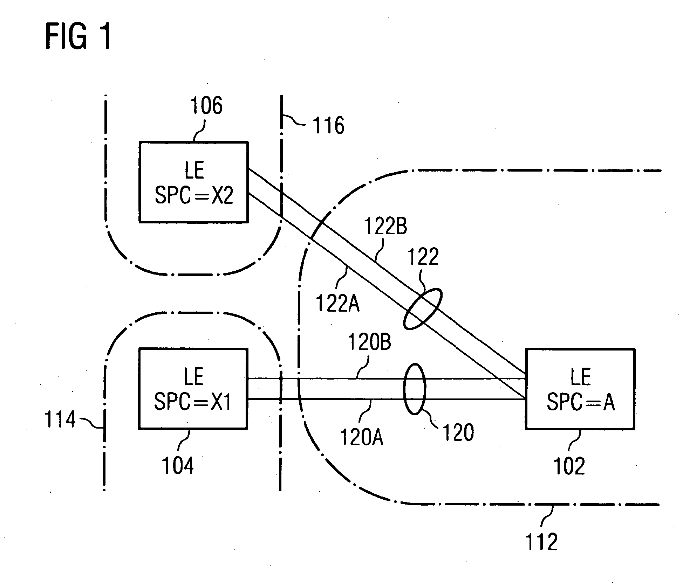

An exemplary network setup involving a local exchange (LE) 102 and two direct neighbors 104, 106 is schematically shown in Fig. 1. It shall be noted that Fig. 1 shows the signaling aspects only. Associated signaling occurs via a first link set 120 comprising two signaling links 120A, 120B between local exchange 102 and first neighbor 104 and also via a second link set 122 comprising two signaling links 122A, 122B between local exchange 102 and second neighbor 106. Note that all signaling points comprise unique signaling point codes, which is "A" for local exchange 102, "X1" for first neighbor 104, and "X2" for second neighbor 106. First and second neighbors 104, 106 may also be local exchanges. In some situations all three local exchanges 102, 104, 106 may be placed in different operator's networks as indicated by dashed curves 112, 114, and 116.

If allowed by an operator of network section 112, LE 102 may act as STP for signaling from LE 104 to LE 106 and vice versa; the signaling between LE 104 and LE 106 would then be quasi-associated.

For either of the network operators there may arise the need to introduce an additional network element in the path towards the local exchange owned by that operator. For example, operator of network section 112 may choose to introduce an additional network element (not shown) in the signaling paths between LE 102 and LE 104 and/or LE 106. Traditionally, such additional network element would be assigned a signaling point code and fundamentally act as STP for messages between LE 102 and LE 104 and/or LE 106. To avoid single points of failure, a pair of signaling transfer points each having a unique signaling point code may typically be deployed. An example can be found in US, 6, 327, 260.

Especially in multi-operator environments such as depicted in Fig. 1 it may not always be possible to reach an agreement on the introduction of new signaling points and their point codes. One reason thereof is that signaling point codes are a limited resource in a SS7 network, and it may very well be that an operator already has as many signaling points in his network as he has signaling point codes available. Another, even more challenging problem is that routing tables in various network elements, including network elements of other operators, need to be changed upon introduction of new signaling (transfer) points.

It is therefore an object of the present invention to provide a novel method for handling messages in network element of a communications network. It is a further object of the invention to provide an improved signaling transfer point. It is yet another object of the present invention to provide a network arrangement having transparent SS7 network elements.

In accordance with the foregoing objectives, there is provided by the invention a method for handling messages in a first SS7 network element of a communications network, comprising:
- providing a first and a second signaling point code in the first SS7 network element, wherein the first signaling point code is also a signaling point code of at least one second SS7 network element and a third SS7 network element;
- providing at least one SS7 link set to the second SS7 network element;
- terminating said SS7 link set to the second SS7 network element at the first or second point code;
- terminating SS7 a link set to the third SS7 network element at the second point code;
- terminating SS7 links to other SS7 network elements having signaling point codes different from the first signaling point code at the first point code;
- forwarding all MTP user part messages received for the first signaling point code to the third network element either directly or via the second network element;
- treating all incoming MTP network management messages such that the first, second, and third network element appear to be one unique network element having the first signaling point code; and
- suppressing or modifying outgoing MTP network management messages that relate to operative conditions of the second or third network element such that the first, second, and third network element appear to be one unique network element having the first signaling point code.

In accordance with the invention, there is also provided a network arrangement in a SS7 communications network, comprising:
- at least two SS7 network elements having a common first and individual second signaling point codes;
- a third network element also having the common signaling point code;
- at least one SS7 link set between the at least two SS7 network elements;
- at least one SS7 link set between each of the at least two SS7 network elements and the third SS7 network element, said SS7 link sets terminating at the individual second point codes;
- at least one SS7 link between each of the at least two SS7 network elements and other SS7 network elements having signaling point codes different from the common signaling point code, said SS7 links terminating at the common point code in each of the at least two SS7 network elements;
- wherein the at least two SS7 network elements comprise:
   - means for forwarding all MTP user part messages received for the common signaling point code to the third network element either directly or via another one of the at least two SS7 network elements;
   - means for treating all incoming MTP network management messages such that the first, second, and third network element appear to be one unique network element having the common signaling point code; and
   - means for suppressing or modifying outgoing MTP network management messages that relate to operative conditions of any other of the at least two SS7 network element or of the third SS7 network element such that the first, second, and third network element appear to be one unique network element having the common signaling point code.

The invention also relates to a Signaling Transfer Point (STP) of a SS7 network, comprising:
- a first and a second signaling point code, wherein the first signaling point code is also a signaling point code of at least one second SS7 network element and a third SS7 network element;
- at least one SS7 link set to the second SS7 network element, said SS7 link set terminating at the first or second point code;
- at least one SS7 link set to the third SS7 network element, said SS7 link set terminating at the second point code;
- at least one SS7 link to other SS7 network elements having signaling point codes different from the first signaling point code, said SS7 link terminating at the first point code;
- means for forwarding all MTP user part messages received for the first signaling point code to the third network element either directly or via the second network element;
- means for treating all incoming MTP network management messages such that the first, second, and third network element appear to be one unique network element having the first signaling point code; and
- means for suppressing or modifying outgoing MTP network management messages that relate to operative conditions of the second or third network element such that the first, second, and third network element appear to be one unique network element having the first signaling point code.

One advantage of the invention is that it allows to transparently introduce a redundant configuration of network elements, preferably signaling transfer points, "in front of" a third network element by presenting the redundant configuration of two or more network elements and the third network elements to other network elements as one unique signaling point. This, in turn, is achieved by the invention by allowing the redundant configuration of network elements and the third network element to "share" the signaling point code originally assigned to the third network element.

Transparently introducing a redundant configuration of network elements in accordance with the invention does advantageously not require a change of the routing information of any network element with the exception of the third network element. This network element however will be under the full control of a network operator introducing such redundant configuration of network elements. Changes in the routing tables of this network element will therefore not require the cooperation of other operators.

In the following, the invention will be described in more detail in the form of advantageous embodiments which are better understood in accordance with the enclosed drawings.
Fig. 1 shows an exemplary network arrangement involving a local exchange having two direct neighbors.
Fig. 2 shows the network arrangement of Fig. 1 wherein a set of signaling transfer points has been introduced in the paths between the local exchange and its neighbors in accordance with the invention.
Fig. 3 shows a message sequence of a changeover procedure in case of a link failure involving one of the signaling transfer points introduced in accordance with the invention.

Fig. 1, as explained in detail above, schematically shows a typical network setup involving a local exchange (LE) 102 and two direct neighbors 104, 106, wherein said three nodes may be placed in three different network sections 112, 114 and 116 owned by different operators.

Operator of network section 112 may wish to introduce a new network element or, to avoid a single point of failure, preferably a redundant configuration of network elements in network section 112 wherein signaling links 120A/B, 122A/B from other operator's network sections 114 and 116 terminate at said redundant configuration of network elements. As this new network element or redundant configuration of network elements as placed at the network boundary it may also be referred to as border network element(s) BNE or BE.

Potential scenarios, where the introduction of border elements may be of advantage, include, but are not limited to, the following:
- Several operators (operators of networks 112, 114, 116) are sharing the same logical SS7 network, having only associated signaling links 120A/B and 122A/B between their network elements and one operator (operator of network 112) whishes to migrate to an STP based SS7 network.
- Screening purposes, e.g. inspecting any received signaling message in full depth to block certain messages such as call setups or ISUP supplementary services or SCCP messages, or to monitor messages and their contents such as sender and content of SMS messages. The operator introducing such screening element may wish it to be "invisible" or transparent for other operator's network elements.
- One operator wishes to replace a TDM based SS7 network by IP based transport. Some aspects of such replacement procedure are covered in ETSI EG 202 360 "Telecommunications and Internet converged Services and Protocols for Advanced Networking (TISPAN); Architectural scenarios and applicability for different SIGTRAN adaptation layers; SIGTRAN scenarios". However, in practical configurations it may be impossible to find one SS7 over IP signaling protocol supported by all network elements. Some network elements such as call servers performing call control may only support the IETF protocol M3UA (RFC 3332 or ETSI TS 102 142), whereas other network elements such as media gateway and/or signaling gateway elements mediating between TDM and IP network only support IETF protocol M2UA (RFC 3331 or ETSI TS 102 141). Introducing an STP that supports all applicable protocols may resolve this issue. Again the operator may wish to introduce such STP transparently.

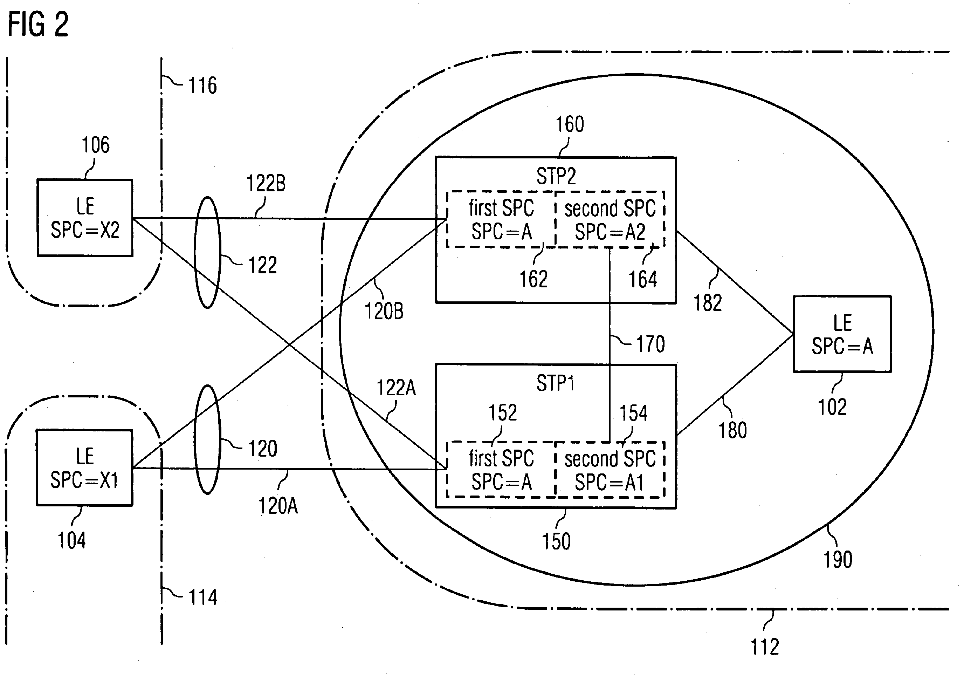

Turning now to Fig. 2, there is shown one preferred embodiment of a network arrangement in accordance with the present invention. As with Fig. 1, Fig. 2 only depicts the signaling aspects; no reference is made to bearer or data channels. In the path between local exchange 102 (hereinafter also referred to as third SS7 network element) and its neighbors 104, 106 (hereinafter also referred to as other SS7 network elements) there is now provided a pair of signaling transfer points 150, 160 (also referred to as first and second SS7 network element). Having a pair of network elements 150, 160 is a minimum configuration for a redundant configuration of network elements. It is understood that more than two such SS7 network elements may be combined into a redundant configuration of network elements. As seen from either of the network elements 150, 160, each other network element 160, 150 in the redundant configuration is a "second" network element and there may exist several such "second" network elements in a redundant configuration.

In detail, LE 104 is connected via link set 120 to each of the first and second STP 150, 160. Link set 120 comprises a first signaling link 120A and a second signaling link 120B. First link 120A terminates at first STP 150 and second link 120B terminates at second STP 160. Likewise, LE 106 is connected via link set 122 to each of the first and second STP 150, 160. Link set 122 comprises a first signaling link 122A and a second signaling link 122B. First link 122A terminates at first STP 150 and second link 122B terminates at second STP 160. Link sets 120, 122 may of course comprise more than two links in other embodiments, wherein more than one link may be connected to either or both STPs 150, 160 allowing a further degree of redundancy.

LE 102 is connected to first STP 150 via link set 180 and to second STP 160 via link set 182. Link sets 180, 182 each comprise at least one signaling link. Between first and second STP 150, 160 there is provided at least one signaling link set 170 comprising at least one link, or multiple signaling link sets each comprising at least one signaling link (not shown).

According to the invention, network arrangement 190 comprising first and second STP 150, 160 and LE 102 is represented to other network elements 104, 106 by a single signaling point code A, also referred to as common or shared signaling point code. To this end, both first and second STP 150, 160 have a first and a second signaling point code, sometimes also referred to as primary and secondary point code. The first point code 152 in STP 150 is chosen to be the shared signaling point code A. Similarly, the first point code 162 in STP 160 is also chosen to be the shared signaling point code A. The second point code 154 in STP 150 is chosen to be a unique signaling point code A1, and the second point code 164 in STP 160 is chosen to be a unique signaling point code A2. Reference is made to international application WO03/032653 published on April 17, 2003 which discloses a method for providing multiple signaling point codes in a SS7 signaling point.

Links 120A/B, 122A/B from other SS7 network elements 104, 106 will be terminated at the first signaling point codes 152, 162, which is the common signaling point code A. This allows connecting one link set 120, 122 to two SS7 network elements 150, 160 simultaneously which would not be possible if SS7 network elements 150, 160 had different point codes (in SS7, all links in a given link set may only terminate at one signaling point code). It further allows maintaining the routing information in other SS7 network elements 104, 106 since the links 120A/B, 122A/B (as seen from the other network elements) still terminate at a signaling point having the signaling point code A, i.e. the other SS7 network elements 104, 106 operate as if they were directly connected to LE 102. In SS7 network elements 150, 160, messages handled are such as if network arrangement 190 were in fact one unique element having the signaling point code A.

The third SS7 network element, LE 102, is connected to the respective second, or individual, point codes 154, 164 in SS7 network elements 150, 160. In detail, a first link set 180 between LE 102 and first STP 150 terminates at second point code 154 of first STP 150, and a second link set 182 between LE 102 and second STP 150 terminates at second point code 164 of first STP 160. Routing information in LE 102 has to be modified such that LE 102 may now reach LEs 104, 106 by means of a route set comprising link sets 180 and 182 via either STP 150, 160. Since these changes apply to a first operator's network 112 only, this operator is free to apply such changes without having to reach agreement with other network's 114, 116 operators.

When terminating links 120A/B, 122A/B at physically different entities having a shared signaling point code A, such point code sharing is effected at MTP Level 3 in accordance with the invention. When sharing the point code at MTP Level 3, user part messages such as ISUP messages will be passed on unmodified by the redundant configuration of SS7 network elements 150, 160 using any route available to a message's destination. For example, an ISUP message received from LE 104 for signaling point code A on link 120A at first STP 150 may be passed on directly via link set 180 to LE 102 or via link set 170 to second STP 160 and from there via link set 182 to LE 102 where the ISUP processing takes place. It is readily apparent that the redundancy of network arrangement 190 allows for continued operation under any single failure condition of any links or signaling element with the exception of LE 102. Failure of first STP 150 for example shall lead to rerouting of affected traffic to second STP 160.

MTP network management messages will be handled such that no indication is given to other network elements 104, 106 that the network configuration 190 is, in fact, not a single node but three or more nodes 150, 160, 102.

MTP network management messages include, but are not limited to the following:
- Change Over Order (COO) and Change Over Acknowledgement (COA) ;
- Emergency Change Over Order (ECO) and Emergency Change Over Acknowledgement (ECA);
- Extended Change Over Order (XCO) and Extended Change Over Acknowledgement (XCA);
- Change Back Declaration (CBD) and Change Back Acknowledgement (CBA);
- Inhibiting Messages (LIN/LIA/LUN/LUA/LID/LFU);
- Inhibiting Test Messages (LLT, LRT); and
- Signaling Link Test Message (SLTM) and Signaling Link Test Acknowledgement (SLTA).

In one embodiment, the signaling link code SLC contained in certain MTP network management messages may be used to facilitate MTP message handling. The SLC of MTP network management messages received from other network elements 104, 106 is determined by the receiving STP 150, 160. If a message relates to a link terminating at the receiving STP 150, 160, then this STP 150, 160 will process the message and respond if required by SS7 procedures. If a message relates to a link not terminating at the receiving STP 150, 160, then this STP 150, 160 will not process the message but forward it to the other STP 160, 150 unless the message was received from this other STP 160, 150, in which case the message will be discarded and no notifications or responses will be sent. The step of forwarding a message relating to a link not terminating locally requires modifications in the MTP message handling function in a STP 150, 160 as any "off the shelf" STP would simply discard any such message.

Of course, if more than two STPs 150, 160 form the redundant configuration of network elements, additional provisions may be implemented to ensure that a message traverses all such network elements exactly once before it is discarded.

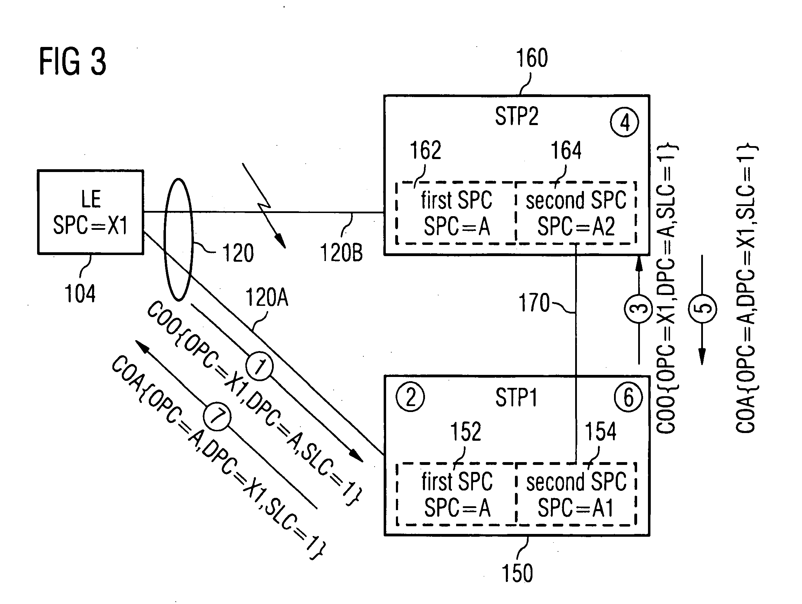

Fig. 3 shows an exemplary application of this preferred principle. For the sake of simplicity, LE 102 and LE 106 and their terminating links are omitted from Fig. 3. In Fig. 3, LE 104 is connected via link 120A to first (shared) signaling point code 152 of first STP 150 and via link 120B to first (shared) signaling point code 162 of second STP 160. Link or link set 170 is connected to the second (individual) signaling point codes 154, 164 of STPs 150, 160. Both links 120A/B are of the same link set 120, as explained above.

In Fig. 3, second link 120B having the SLC=1 is assumed to have come out of service. LE 104 will, upon detecting the failure of second link 120B of link set 120, send a changeover order (COO) to the adjacent signaling point code of that link set 120, which is the shared signaling point code A (step 1). The COO will have an origination point code (OPC) equal to the signaling point code of LE 104 (OPC=X1), a destination point code equal to the signaling point code of the signaling point adjacent at that link set 120, which is the shared signaling point code A (DPC=A), and reference the failed link 120B (SLC=1). First STP 150 receives this message (step 2) and determines the SLC of the COO, which is SLC=1. Since link 120B having SLC=1 does not terminate at first STP 150, and the COO was not received from second STP 160 via link set 170, first STP 150 forwards the COO to second STP 160 (step 3). In more detail, the COO is first forwarded internally from the common signaling point code 152 to the individual signaling point code 154 before it is sent to individual signaling point code 164 of second STP 160.

In step 4, the COO is received at second STP 160. In more detail, the COO is received by the individual signaling point code 164 of second STP 160 and forwarded internally to the common signaling point code 162 as determined from the DPC=A of the COO. Second STP 160 determines the SLC of the COO, which is SLC=1. Since link 120B having SLC=1 does terminate at second STP 160, second STP processes the message. In response to a COO a changeover acknowledgement message (COA) is required. Such COA is generated by second STP 160 and returned to LE 104 on any available link of the same link set the COO was received on (steps 5-7).

In the example of Fig. 3 where there is only one (disturbed) link 120B between STP 160 and LE 104, the COA is created by the common signaling point code 162 of second STP 160 and forwarded internally to the individual signaling point code 164 for further transfer to first STP 150. The COA will have an origination point code (OPC) equal to the shared signaling point code A (OPC=A), a destination point code equal to the signaling point code of the signaling point adjacent to link set 120, which is the signaling point code of LE1 (DPC=X1), and reference the failed link (SLC=1). The OPC in the COA must not be the second STP's second point code 164 as this point code is not known at LE 104.

The COA is then received at first STP 150. In more detail, the COA is received by the individual signaling point code 154 of second STP 150 and forwarded internally to the common signaling point code 152. Then the COA is forwarded to LE 104 in step 7. In general, messages not relating to the common signaling point code A are not handled in accordance with the principles laid out above but forwarded in accordance with their DPC.

It shall be noted that the regular behavior of first STP 150 upon receiving a COO for a link 120B not terminating at first STP 150 would be to discard this message. This behavior is suppressed and replaced by the procedure as laid out above. Any COO message(s) that would normally be created by second STP 160 upon detecting the link failure may either be suppressed or sent in a similar fashion as described with reference to the COA.

If there is more than one link 120B between STP 160 and LE 104 (not shown), the COA (having the same parameters OPC=X1, DPC=A, SLC=1) may alternatively be sent directly to LE 104 from the common signaling point code 162 of second STP 160.

With respect to signaling link test messages and their acknowledgements (SLTM/SLTA), STP 150, 160 may implement the behavior as laid out in the SS7 standards: any SLTM received on the same link it references by means of SLC will be answered by a SLTA, and any SLTM received on a different link than that referenced by means of SLC will be discarded.

If in the example of Fig. 3 all links of link set 170 to the second STP 160 are out of service, i.e. the COO cannot be forwarded from first STP 150 to second STP 160, first STP 150 may immediately respond to the incoming COO with a corresponding emergency changeover acknowledgement message (ECA).

Turning back to Fig. 2, there may occur an operative condition where either of the STPs 150, 160 is no longer able to communicate with the other STP and LE 102. For example, second STP 160 may no longer be able to reach first STP 150 due to a failure of all links in link set 170, and LE 102 due to a failure of all links in link set 182. The connections to LE 104, 106 however may still be in service. Generally, second STP 160 would send corresponding TFP messages to LE 104 and LE 106. This however would reveal that the network arrangement 190 consists of multiple network elements 102, 150, 160, which is undesirable. Therefore, such TFP messages will be suppressed, and the links 120B, 122B to all other network elements 104, 106 will be taken out of service instead. As soon as LE 102 becomes reachable again, second STP 160 reactivates these links 120B, 122B.

After such isolation of second STP 160, and in other situations where only one of the STPs 150, 160 looses its connection with other network elements 104, 106, this STP would perform a MTP restart procedure as soon as the first link towards the other network elements 104, 106 becomes available again. The other network elements 104, 106 however will not perform a MTP restart as some links towards the common signaling point code A are still active via the other STP. The other network elements 104, 106 will most likely perform the change back procedure (ITU-T, Q.704, chapter 6) instead of the MTP restart procedure (ITU-T, Q.704, chapter 9). To overcome potential problems resulting from this situation, the following may be provided:
- The restarting STP 160 will preferably send a Traffic Restart Allowed message (TRA) to LE 104, 106. Although this message may alternatively be suppressed, sending such message is preferred to also cover situations in which all STPs 150, 160 had lost connection to LEs 104, 106 and a "real" restart of arrangement 190 representing signaling point code A is expected. The restarting STP 160 will not wait for a TRA to be returned. The TRA supervision timer (T18 respectively T21) is not started. As the LEs 104, 106 may only perform change back, the restarting STP 160 immediately has to be able to handle user traffic.
- If a LE 104, 106 sends a TRA (either because it is restarting or in response to an unexpected TRA), such TRA may be received at any of the two STPs, including a STP not expecting a TRA at that time. While it would be possible to respond to such unexpected TRA with another TRA in accordance with ITU-T Q.704, such responses may lead to a sequence of unexpected TRA messages. To avoid such a situation, it is preferred to discard unexpected TRA messages in the STPs and suppress the appropriate response.

The invention is applicable to all transport protocols available in SS7. More particularly, the present invention does not require links 120A/B, 122A/B and the links in link sets 170, 180, 182 to be TDM based SS7 links. Instead, the signaling transfer points 150, 160 may be employed to provide for interworking between different signaling protocols such as TDM and IP based SS7 protocols. The following is an example in connection with Fig. 2: Link set 120 from LE 104 to redundant configuration of network elements 150, 160 may comprise a conventional TDM link 120A and a link 120B that is handled by a signaling gateway (not shown) which effects TDM-IP interworking between MTP Level 2 and M2UA/SCTP/IP according RFC 3331. Link set 170 between the STPs 150, 160 may comprise IP based links using M2PA/SCTP and/or M3UA/SCTP and/or conventional MTP. Link sets 180, 182 may also use any of the signaling protocols M2PA/SCTP and/or M3UA/SCTP and/or conventional MTP. Where necessary, each individual link may be according to a different signaling protocol.

While link set 170 has been shown to terminate in both STPs 150, 160 at the individual point codes 154, 164, other embodiments may include links and/or link sets connecting the individual point code 154 of first STP 150 to the common point code 162 of second STP 160 and individual point code 164 of second STP 160 to the common point code 152 of first STP 150. The setup of STPs 150, 160, and such link sets, may be such that messages to be transferred from first STP 150 to second STP 160 are received at first point code 152 and forwarded to second point code 154 in first STP 150, and are then forwarded to first point code 162 in second STP 160. Similarly, messages to be transferred from second STP 160 to first STP 150 are received at first point code 162 and forwarded to second point code 164 in first STP 160 and are then forwarded to first point code 152 in first STP 150.

While the redundant configuration 150, 160 has been described with reference to Fig. 2 as being transparently introduced in front of one signaling point 102 having a signaling point code SPC=A, the same redundant configuration 150, 160 may also be used to represent more than one point code (not shown) to the other network elements 104, 106. To represent a second point code SPC=B (not shown), a second logical MTP network can be created in both STPs 150, 160. A signaling transfer point supporting up to 32 logical MTP networks is known as his 700, manufactured by Siemens. In this second logical network, the setup is similar to the setup described herein with reference to signaling point code SPC=A.

It shall be noted that local exchanges 102, 104, 106 may each comprise multiple point codes and/or MTP networks (not shown) as required by a specific application. It will be readily apparent from the detailed description how the inventive principle may be applied in such configurations.

## Claims

1. A method for handling messages in a first SS7 network element (150) of a communications network, comprising:
- providing a first (152) and a second (154) signaling point code in the first SS7 network element (150), wherein the first signaling point code (152) is also a signaling point code of at least one second SS7 network element (160) and a third SS7 network element (102);
- providing at least one SS7 link set (170) to the second SS7 network element (160);
- terminating said SS7 link set (170) to the second SS7 network element (160) at the first (152) or second (154) point code;
- terminating a SS7 link set (180) to the third SS7 network element (102) at the second point code (154);
- terminating SS7 links (120A, 122A) to other SS7 network elements (104, 106) having signaling point codes different from the first signaling point code (152) at the first point code (152);
- forwarding all MTP user part messages received for the first signaling point code to the third network element (102) either directly or via the second network element (160) ;
- treating all incoming MTP network management messages such that the first (150), second (160), and third (102) network element appear to be one unique network element having the first signaling point code; and
- suppressing or modifying outgoing MTP network management messages relating to operative conditions of the second (160) or third network element (102) such that the first (150), second (160), and third (102) network element appear to be one unique network element having the first signaling point code.

2. The method according to claim 1, wherein the steps of treating, suppressing or modifying MTP network management messages comprise:
- determining the SLC of a received MTP network management message;
- if the SLC relates to a signaling link (120B, 122B) not terminating at the first network element (150), forwarding message to the second network element (160) if the message was not received from the second network element (160), or alternatively discarding the message if the message was received from the second network element (160); else
- if the SLC relates to a signaling link (120A, 122A) terminating at the first network element (150), processing the message in accordance with standard SS7 procedures and returning any applicable responses.

3. The method according to claim 2, further comprising the step of sending a changeover acknowledgement message or emergency changeover acknowledgement message in response to any incoming changeover order messages if all links of the link set (170) to the second network element (160) are out of service.

4. The method according to any of claims 2 or 3, further comprising the steps of
- suppressing the sending of transfer prohibited messages to other network elements (104, 106); and
- taking out of service any signaling links (120A, 122A) to said other network elements (104, 106);
if all links in link sets (170, 180) to the second (160) and third (102) network elements are out of service.

5. The method according to any of the preceding claims, wherein either or all signaling links (120A, 122A, 170, 180) terminating at the first network element (150) are traditional TDM links and/or ATM links and/or M2UA links and/or M2PA links and/or M3UA links.

6. Network arrangement (190) in a SS7 communications network, comprising:
- at least two SS7 network elements (150, 160) having a common first (152, 162) and individual second (154, 164) signaling point codes;
- a third network element (102) also having the common signaling point code;
- at least one SS7 link set (170) between the at least two SS7 network elements (150, 160);
- at least one SS7 link set (180, 182) between each of the at least two SS7 network elements (150, 160) and the third SS7 network element (102), said SS7 link sets (180, 182) terminating at the individual second point codes (154, 164);
- at least one SS7 link (120A/B, 122A/B) between each of the at least two SS7 network elements (150, 160) and other SS7 network elements (104, 106) having signaling point codes different from the common signaling point code, said SS7 links (120A/B, 122A/B) terminating at the common point code (152, 162) in each of the at least two SS7 network elements (150, 160);
- wherein the at least two SS7 network elements (150, 160) comprise:
- means for forwarding all MTP user part messages received for the common signaling point code to the third network element (102) either directly or via another one of the at least two SS7 network elements;
- means for treating all incoming MTP network management messages such that the first (150), second (160), and third (102) network element appear to be one unique network element having the common signaling point code; and
- means for suppressing or modifying outgoing MTP network management messages that relate to operative conditions of any other of the at least two SS7 network elements or of the third SS7 network element (102) such that the first (150), second (160), and third (102) network element appear to be one unique network element having the common signaling point code.

7. Network arrangement (190) according to claim 6, wherein said at least one SS7 link set (170) between the at least two SS7 network elements (150, 160) connects the individual second point codes (154, 164).

8. Network arrangement (190) according to any of the claims 6 or 7, comprising a plurality of SS7 link sets between the at least two SS7 network elements (150, 160), said SS7 link sets arranged such that the individual second point code (154, 164) of each of the SS7 network elements (150, 160) is connected to the common first point code (162, 152) of at least one other of the SS7 network elements (160, 150).

9. Network arrangement (190) according to any of the claims 6 through 8, wherein the treating, suppressing or modifying means comprise means for:
- determining the SLC of a received MTP network management message;
- if the SLC relates to a signaling link not terminating at one of the at least two SS7 network elements (150, 160), forwarding the message to another one of the at least two SS7 network elements if the message was not received from another one of the at least two SS7 network elements or has not traversed all other of the at least two SS7 network elements, or alternatively discarding the message if the message was received from another one of the at least two SS7 network elements (150, 160) after traversing all other of the at least two SS7 network elements; else
- if the SLC relates to a signaling link terminating at one of the at least two SS7 network elements, processing the message at this SS7 network element in accordance with standard SS7 procedures and returning any applicable responses.

10. Network arrangement (190) according to claim 9, wherein the at least two SS7 network elements (150, 160) further comprise means for sending a changeover acknowledgement message or emergency changeover acknowledgement message in response to any incoming changeover order messages if all links to all other of the at least two SS7 network elements (150, 160) are out of service.

11. Network arrangement (190) according to any of claims 9 or 10, wherein each of the at least two SS7 network elements (150, 160) further comprises means for
- suppressing the sending of transfer prohibited messages to other network elements (104, 106); and
- taking out of service any signaling links to said other network elements (104, 106);
if all links between said one of the at least two SS7 network elements and all other of the at least two SS7 network elements and all links between said one of the at least two SS7 network elements and the third network element are out of service.

12. Network arrangement (190) according to any of claims 6 through 11, wherein either or all signaling links (120A/B, 122A/B, 170, 180, 182) comprise traditional TDM links and/or ATM links and/or M2UA links and/or M2PA links and/or M3UA links.

13. A Signaling Transfer Point (150) of a SS7 network, comprising:
- a first (152) and a second (154) signaling point code, wherein the first signaling point code (152) is also a signaling point code of at least one second SS7 network element (160) and a third SS7 network element (102);
- at least one SS7 link set (170) to the second SS7 network element (160), said SS7 link set (170) terminating at the first (152) or second (154)point code;
- at least one SS7 link set (180) to the third SS7 network element (102), said SS7 link set (180) terminating at the second point code (154);
- at least one SS7 link (120A, 122A) to other SS7 network elements (104, 106) having signaling point codes different from the first signaling point code, said SS7 link (120A, 122A) terminating at the first point code (152);
- means for forwarding all MTP user part messages received for the first signaling point code to the third network element (102) either directly or via the second network element (160);
- means for treating all incoming MTP network management messages such that the signaling transfer point (150), the second (160), and third (102) network element appear to be one unique network element having the first signaling point code; and
- means for suppressing or modifying outgoing MTP network management messages that relate to operative conditions of the second (160) or third network element (102) such that the signaling transfer point (150), the second (160), and third (102) network element appear to be one unique network element having the first signaling point code.

14. The Signaling Transfer Point (150) according to claim 13, wherein the treating, suppressing or modifying means comprise means for:
- determining the SLC of a received MTP network management message;
- if the SLC relates to a signaling link not terminating at the signaling transfer point (150), forwarding message to the second network element (150) if the message was not received from the second network element (150), or alternatively discarding the message if the message was received from the second network element (150); else
- if the SLC relates to a signaling link terminating at the signaling transfer point (150), processing the message in accordance with standard SS7 procedures and returning any applicable responses.

15. The Signaling Transfer Point (150) according to claim 14, further comprising means for sending a changeover acknowledgement message or emergency changeover acknowledgement message in response to any incoming changeover order messages if all links to the second network element (160) are out of service.

16. The Signaling Transfer Point (150) according to any of claims 13 or 14, further comprising means for
- suppressing the sending of transfer prohibited messages to other network elements (104, 106); and
- taking out of service any signaling links (120A, 122A) to said other network elements (104, 106); if all links in link sets (170, 180) to the second (160) and third (102) network elements are out of service.

17. The Signaling Transfer Point (150) according to any of the claims 13 trough 16, further comprising means for connecting to SS7 links (120A, 122A, 170, 180) comprising traditional TDM links and/or ATM links and/or M2UA links and/or M2PA links and/or M3UA links.

## Patentansprüche

1. Verfahren zum Behandeln von Nachrichten in einem ersten SS7-Netzelement (150) eines Kommunikationsnetzes, mit den folgenden Schritten:
- Bereitstellen eines ersten (152) und eines zweiten (154) Signaling Point Code in dem ersten SS7-Netzelement (150), wobei der erste Signaling Point Code (152) auch ein Signaling Point Code von mindestens einem zweiten SS7-Netzelement (160) und einem dritten SS7-Netzelement (102) ist;
- Bereitstellen mindestens einer SS7-Link-Menge (170) für das zweite SS7-Netzelement (160);
- Abschließen der SS7-Link-Menge (170) zu dem zweiten SS7-Netzelement (160) an dem ersten (152) oder zweiten (154) Point Code;
- Abschließen einer SS7-Link-Menge (180) zu dem dritten SS7-Netzelement (102) an dem zweiten Point Code (154);
- Abschließen von SS7-Links (120A, 122A) zu anderen SS7-Netzelementen (104, 106) mit von dem ersten Signaling Point Code (152) verschiedenen Signaling Point Codes an dem ersten Point Code (152);
- Weiterleiten aller für den ersten Signaling Point Code empfangenen MTP User Part Messages zu dem dritten Netzelement (102) entweder direkt oder über das zweite Netzelement (160);
- Behandeln aller ankommenden MTP-Netzverwaltungsnachrichten dergestalt, daß das erste (150), zweite (160) und dritte (102) Netzelement als ein einziges Netzelement mit dem ersten Signaling Point Code erscheinen; und
- Unterdrücken oder Modifizieren von abgehenden MTP-Netzverwaltungsnachrichten in bezug auf Betriebsbedingungen des zweiten (160) oder dritten Netzelements (102) dergestalt, daß das erste (150), zweite (160) und dritte (102) Netzelement als ein einziges Netzelement mit dem ersten Signaling Point Code erscheinen.

2. Verfahren nach Anspruch 1, wobei die Schritte des Behandelns, Unterdrückens oder Modifizierens von MTP-Netzverwaltungsnachrichten folgendes umfassen:
- Bestimmen des SLC einer empfangenen MTP-Netzverwaltungsnachricht;
- wenn der SLC einen Signalisierungs-Link (120B, 122B) betrifft, der nicht an dem ersten Netzelement (150) abgeschlossen wird, Weiterleiten der Nachricht zu dem zweiten Netzelement (160), wenn die Nachricht nicht aus dem zweiten Netzelement (160) empfangen wurde, oder als Alternative Verwerfen der Nachricht, wenn die Nachricht aus dem zweiten Netzelement (160) empfangen wurde; andernfalls
- wenn der SLC einen Signalisierungs-Link (120A, 122A) betrifft, der an dem ersten Netzelement (150) abgeschlossen wird, Verarbeiten der Nachricht gemäß Standard-SS7-Prozeduren und Zurückgeben etwaiger betreffender Antworten.

3. Verfahren nach Anspruch 2, ferner mit dem Schritt des Sendens einer Changeover Acknowledgement Message oder Emergency Changeover Acknowledgement Message als Reaktion auf etwaige ankommende Changeover Order Messages, wenn alle Links der Link-Menge (170) zu dem zweiten Netzelement (160) außer Betrieb sind.

4. Verfahren nach einem der Ansprüche 2 oder 3, ferner mit den folgenden Schritten:
- Underdrücken des Sendes von Transfer Prohibited Messages zu anderen Netzelementen (104, 106); und
- Außerbetriebnehmen etwaiger Signalisierungs-Links (120A, 122A) zu den anderen Netzelementen (104, 106);
- wenn alle Links in den Link-Mengen (170, 180) zu dem zweiten (160) und dritten (102) Netzelement außer Betrieb sind.

5. Verfahren nach einem der vorhergehenden Ansprüche, wobei die Signalisierungs-Links (120A, 122A, 170, 180), die an dem ersten Netzelement (150) abgeschlossen werden, jeweils oder alle traditionelle TDM-Links und/oder ATM-Links und/oder M2UA-Links und/oder M2PA-Links und/oder M3UA-Links sind.

6. Netzanordnung (190) in einem SS7-Kommunikationsnetz, umfassend:
- mindestens zwei SS7-Netzelemente (150, 160) mit einem gemeinsamen ersten (152, 162) und individuellen zweiten (154, 164) Signaling Point Code;
- ein drittes Netzelement (102), ebenfalls mit dem gemeinsamen Signaling Point Code;
- mindestens eine SS7-Link-Menge (170) zwischen den mindestens zwei SS7-Netzelementen (150, 160);
- mindestens eine SS7-Link-Menge (180, 182) zwischen jedem der mindestens zwei SS7-Netzelemente (150, 160) und dem dritten SS7-Netzelement (102), wobei die SS7-Link-Mengen (180, 182) an den individuellen zweiten Point Codes (154, 164) abgeschlossen werden;
- mindestens einen SS7-Link (120A/B, 122A/B) zwischen jedem der mindestens zwei SS7-Netzelemente (150, 160) und anderen SS7-Netzelementen (104, 106) mit von dem gemeinsamen Signaling Point Code verschiedenen Signaling Point Codes, wobei die SS7-Links (120A/B, 122A/B) an dem gemeinsamen Point Code (152, 162) in jedem der mindestens zwei SS7-Netzelemente (150, 160) abgeschlossen werden;
- wobei die mindestens zwei SS7-Netzelemente (150, 160) folgendes umfassen:
- Mittel zum Weiterleiten aller für den gemeinsamen Signaling Point Code empfangenen MTP User Part Messages zu dem dritten Netzelement (102) entweder direkt oder über ein anderes der mindestens zwei SS7-Netzelemente;
- Mittel zum Behandeln aller ankommenden MTP-Netzverwaltungsnachrichten dergestalt, daß das erste (150), zweite (160) und dritte (102) Netzelement als ein einziges Netzelement mit dem gemeinsamen Signaling Point Code erscheinen; und
- Mittel zum Unterdrücken oder Modifizieren abgehender MTP-Netzverwaltungsnachrichten, die Betriebsbedingungen beliebiger anderer der mindestens zwei SS7-Netzelemente oder des dritten SS7-Netzelements (102) betreffen, dergestalt, daß das erste (150), zweite (160) und dritte (102) Netzelement als ein einziges Netzelement mit dem gemeinsamen Signaling Point Code erscheinen.

7. Netzanordnung (190) nach Anspruch 6, wobei die mindestens eine SS7-Link-Menge (170) zwischen den mindestens zwei SS7-Netzelementen (150, 160) die individuellen zweiten Point Codes (154, 164) verbindet.

8. Netzanordnung (190) nach einem der Ansprüche 6 oder 7, mit mehreren SS7-Link-Mengen zwischen den mindestens zwei SS7-Netzelementen (150, 160), wobei die SS7-Link-Mengen so angeordnet sind, daß der individuelle zweite Point Code (154, 164) jedes der SS7-Netzelemente (150, 160) mit dem gemeinsamen ersten Point Code (162, 152) von mindestens einem anderen der SS7-Netzelemente (160, 150) verbunden wird.

9. Netzanordnung (190) nach einem der Ansprüche 6 bis 8, wobei die Mittel zum Behandeln, Unterdrücken oder Modifizieren Mittel für folgendes umfassen:
- Bestimmen des SLC einer empfangenen MTP-Netzverwaltungsnachricht;
- wenn der SLC einen Signalisierungs-Link betrifft, der nicht an einem der mindestens zwei SS7-Netzelemente (150, 160) abgeschlossen wird, Weiterleiten der Nachricht zu einem anderen der mindestens zwei SS7-Netzelemente, wenn die Nachricht nicht aus einem anderen der mindestens zwei SS7-Netzelemente empfangen wurde oder nicht alle anderen der mindestens zwei SS7-Netzelemente durchquert hat, oder als Alternative Verwerfen der Nachricht, wenn die Nachricht nach dem Durchqueren aller anderen der mindestens zwei SS7-Netzelemente aus einem anderen der mindestens zwei SS7-Netzelemente (150, 160) empfangen wurde; andernfalls
- wenn der SLC einen Signalisierungs-Link betrifft, der an einem der mindestens zwei SS7-Netzelemente abgeschlossen wird, Verarbeiten der Nachricht bei diesem SS7-Netzelemente gemäß Standard-SS7-Prozeduren und Zurückgeben etwaiger betreffender Antworten.

10. Netzanordnung (190) nach Anspruch 9, wobei die mindestens zwei SS7-Netzelemente (150, 160) ferner folgendes umfassen:
Mittel zum Senden einer Changeover Acknowledgement Message oder Emergency Changeover Acknowledgement Message als Reaktion auf etwaige ankommende Changeover Order Messages, wenn alle Links zu allen anderen der mindestens zwei SS7-Netzelemente (150, 160) außer Betrieb sind.

11. Netzanordnung (190) nach einem der Ansprüche 9 oder 10, wobei jedes der mindestens zwei SS7-Netzelemente (150, 160) ferner Mittel für folgendes umfaßt:
- Underdrücken des Sendes von Transfer Prohibited Messages zu anderen Netzelementen (104, 106); und
- Außerbetriebnehmen etwaiger Signalisierungs-Links zu den anderen Netzelementen (104, 106);
- wenn alle Links zwischen dem einen der mindestens zwei SS7-Netzelemente und allen anderen der mindestens zwei SS7-Netzelemente und alle Links zwischen dem einen der mindestens zwei SS7-Netzelemente und dem dritten Netzelement außer Betrieb sind.

12. Netzanordnung (190) nach einem der Ansprüche 6 bis 11, wobei die Signalisierungs-Links (120A/B, 122A/B, 170, 180, 182) jeweils oder alle traditionelle TDM-Links und/oder ATM-Links und/oder M2UA-Links und/oder M2PA-Links und/oder M3UA-Links umfassen.

13. Signaling Transfer Point (150) eines SS7-Netzes, umfassend:
- einen ersten (152) und einen zweiten (154) Signaling Point Code, wobei der erste Signaling Point Code (152) auch ein Signaling Point Code mindestens eines zweiten SS7-Netzelements (160) und eines dritten SS7-Netzelements (102) ist;
- mindestens eine SS7-Link-Menge (170) zu dem zweiten SS7-Netzelement (160), wobei die SS7-Link-Menge (170) an dem ersten (152) oder zweiten (154) Point Code abgeschlossen wird;
- mindestens eine SS7-Link-Menge (180) zu dem dritten SS7-Netzelement (102), wobei die SS7-Link-Menge (180) an dem zweiten Point Code (154) abgeschlossen wird;
- mindestens einen SS7-Link (120A, 122A) zu anderen SS7-Netzelementen (104, 106) mit von dem ersten Signaling Point Code verschiedenen Signaling Point Codes, wobei der SS7-Link (120A, 122A) an dem ersten Point Code (152) abgeschlossen wird;
- Mittel zum Weiterleiten aller für den ersten Signaling Point Code empfangenen MTP User Part Messages zu dem dritten Netzelement (102) entweder direkt oder über das zweite Netzelement (160);
- Mittel zum Behandeln aller ankommenden MTP-Netzverwaltungsnachrichten dergestalt, daß der Signaling Transfer Point (150), das zweite (160) und dritte (102) Netzelement als ein einziges Netzelement mit dem ersten Signaling Point Code erscheinen; und
- Mittel zum Unterdrücken oder Modifizieren abgehender MTP-Netzverwaltungsnachrichten, die Betriebsbedingungen des zweiten (160) oder dritten Netzelements (102) betreffen, dergestalt, daß der Signaling Transfer Point (150), das zweite (160) und dritte (102) Netzelement als ein einziges Netzelement mit dem ersten Signaling Point Code erscheinen.

14. Signaling Transfer Point (150) nach Anspruch 13, wobei die Mittel zum Behandeln, Unterdrücken oder Modifizieren Mittel für folgendes umfassen:
- Bestimmen des SLC einer empfangenen MTP-Netzverwaltungsnachricht;
- wenn der SLC einen Signalisierungs-Link betrifft, der nicht an dem Signaling Transfer Point (150) abgeschlossen wird, Weiterleiten der Nachricht zu dem zweiten Netzelement (160), wenn die Nachricht nicht aus dem zweiten Netzelement (160) empfangen wurde, oder als Alternative Verwerfen der Nachricht, wenn die Nachricht aus dem zweiten Netzelement (160) empfangen wurde; andernfalls
- wenn der SLC einen Signalisierungs-Link betrifft, der an dem Signaling Transfer Point (150) abgeschlossen wird, Verarbeiten der Nachricht gemäß Standard-SS7-Prozeduren und Zurückgeben etwaiger betreffender Antworten.

15. Signaling Transfer Point (150) nach Anspruch 14, ferner mit Mitteln zum Senden einer Changeover Acknowledgement Message oder Emergency Changeover Acknowledgement Message als Reaktion auf etwaige ankommende Changeover Order Messages, wenn alle Links zu dem zweiten Netzelement (160) außer Betrieb sind.

16. Signaling Transfer Point (150) nach einem der Ansprüche 13 oder 14, ferner mit Mitteln für folgendes:
- Underdrücken des Sendes von Transfer Prohibited Messages zu anderen Netzelementen (104, 106); und
- Außerbetriebnehmen etwaiger Signalisierungs-Links (120A, 122A) zu den anderen Netzelementen (104, 106);
wenn alle Links in den Link-Mengen (170, 180) zu dem zweiten (160) und dritten (102) Netzelement außer Betrieb sind.

17. Signaling Transfer Point (150) nach einem der Ansprüche 13 bis 16, ferner mit Mitteln zum Verbinden mit SS7-Links (120A, 122A, 170, 180), die traditionelle TDM-Links und/oder ATM-Links und/oder M2UA-Links und/oder M2PA-Links und/oder M3UA-Links umfassen.

## Revendications

1. Procédé pour gérer des messages dans un premier élément de réseau SS7 (150) d'un réseau de communications, comprenant :
- prévoir un premier (152) et deuxième (154) codes de points de signalisation dans le premier élément de réseau SS7 (150), dans lequel le premier code de point de signalisation (152) est également un code de point de signalisation d'au moins un deuxième élément de réseau SS7 (160) et un troisième élément de réseau SS7 (102) ;
- prévoir au moins un ensemble de liaisons SS7 (170) vers le deuxième élément de réseau SS7 (160) ;
- faire aboutir ledit ensemble de liaisons SS7 (170) vers le deuxième élément de réseau SS7 (160) au niveau du premier (152) ou du deuxième (154) code de point ;
- faire aboutir un ensemble de liaisons SS7 (180) vers le troisième élément de réseau SS7 (102) au niveau du deuxième code de point (154) ;
- faire aboutir des liaisons SS7 (120A, 122A) vers les autres éléments de réseau SS7 (104, 106) ayant des codes de point de signalisation différents du premier code de point de signalisation (152) au niveau du premier code de point (152) ;
- acheminer tous les messages de la partie utilisateur MTP reçus pour le premier code de point de signalisation vers le troisième élément de réseau (102) soit directement, soit par l'intermédiaire du deuxième élément de réseau (160) ;
- traiter tous les messages de gestion réseau MTP entrants de telle manière que le premier (150), le deuxième (160), et le troisième (102) éléments de réseau semblent être un élément de réseau unique ayant le premier code de point de signalisation ; et
- supprimer ou modifier les messages de gestion réseau MTP sortants qui se rapportent aux conditions opérationnelles du deuxième (160) ou du troisième (102) élément de réseau de telle manière que le premier (150), le deuxième (160), et le troisième (102) éléments de réseau semblent être un élément de réseau unique ayant le premier code de point de signalisation.

2. Procédé selon la revendication 1, dans lequel les étapes de traitement, de suppression ou de modification des messages de gestion réseau MTP comprennent :
- déterminer le SLC d'un message de gestion réseau MTP reçu ;
- si le SLC se rapporte à une liaison de signalisation (120B, 122B) n'aboutissant pas au premier élément de réseau (150), acheminer le message au deuxième élément de réseau (160) si le message n'a pas été reçu du deuxième élément de réseau (160), ou à titre d'alternative rejeter le message si le message a été reçu du deuxième élément de réseau (160) ; sinon
- si le SLC se rapporte à une liaison de signalisation (120B, 122B) aboutissant au premier élément de réseau (150), traiter le message conformément aux procédures SS7 standard et renvoyer toutes réponses applicables.

3. Procédé selon la revendication 2, comprenant en outre l'étape d'envoyer un message d'accusé de réception de transfert ou un message d'accusé de réception de transfert d'urgence en réponse à de quelconques messages d'ordre de transfert entrants si toutes les liaisons de l'ensemble de liaisons (170) vers le deuxième élément de réseau (160) sont hors service.

4. Procédé selon l'une quelconque des revendications 2 ou 3, comprenant en outre les étapes de
- supprimer l'envoi de messages d'interdiction de transfert aux autres éléments de réseau (104, 106) ; et
- mettre hors service toutes liaisons de signalisation (120A, 122A) vers lesdits autres éléments de réseau (104, 106) ;
si toutes les liaisons dans les ensembles de liaisons (170, 180) vers le deuxième (160) et le troisième (102) éléments de réseau sont hors service.

5. Procédé selon l'une quelconque des revendications précédentes, dans lequel l'une des ou toutes les liaisons de signalisation (120A, 122A, 170, 180) aboutissant au premier élément de réseau (150) sont des liaisons TDM et/ou des liaisons ATM et/ou des liaisons M2UA et/ou des liaisons M2PA et/ou des liaisons M3UA classiques.

6. Agencement de réseau (190) dans un réseau de communications SS7, comprenant :
- au moins deux éléments de réseau SS7 (150, 160) ayant un premier code de point de signalisation commun (152, 162) et des deuxièmes codes de points de signalisation individuels (154, 164) ;
- un troisième élément de réseau (102) ayant également le code de point de signalisation commun ;
- au moins un ensemble de liaisons SS7 (170) entre les au moins deux éléments de réseau SS7 (150, 160) ;
- au moins un ensemble de liaisons SS7 (180, 182) entre chacun des au moins deux éléments de réseau SS7 (150, 160) et le troisième élément de réseau SS7 (102), lesdits ensembles de liaisons SS7 (180, 182) aboutissant aux deuxièmes codes de points individuels (154, 164) ;
- au moins une liaison SS7 (120A/B, 122A/B) entre chacun des au moins deux éléments de réseau SS7 (150, 160) et les autres éléments de réseau SS7 (104, 106) ayant des codes de points de signalisation différents du code de point de signalisation commun, lesdites liaisons SS7 (120A/B, 122A/B) aboutissant au code de point commun (152, 162) dans chacun des au moins deux éléments de réseau SS7 (150, 160) ;
- où les au moins deux éléments de réseau SS7 (150, 160) comprennent :
- un moyen pour acheminer tous les messages de la partie utilisateur MTP reçus pour le code de point de signalisation commun vers le troisième élément de réseau (102) soit directement, soit par l'intermédiaire d'un autre des au moins deux éléments de réseau SS7 ;
- un moyen pour traiter tous les messages de gestion réseau MTP entrants de telle manière que le premier (150), le deuxième (160), et le troisième (102) éléments de réseau semblent être un élément de réseau unique ayant le code de point de signalisation commun ; et
- un moyen pour supprimer ou modifier les messages de gestion réseau MTP sortants qui se rapportent aux conditions opérationnelles d'un autre quelconque des au moins deux éléments de réseau SS7 ou du troisième élément de réseau SS7 (102) de telle manière que le premier (150), le deuxième (160), et le troisième (102) éléments de réseau semblent être un élément de réseau unique ayant le code de point de signalisation commun.

7. Agencement de réseau (190) selon la revendication 6, dans lequel ledit au moins un ensemble de liaisons SS7 (170) entre les au moins deux éléments de réseau SS7 (150, 160) connecte les deuxièmes codes de points individuels (154, 164).

8. Agencement de réseau (190) selon l'une quelconque des revendications 6 ou 7, comprenant une pluralité d'ensembles de liaisons SS7 entre les au moins deux éléments de réseau SS7 (150, 160), lesdits ensembles de liaisons SS7 agencés de telle manière que le deuxième code de point individuel (154, 164) de chacun des éléments de réseau SS7 (150, 160) est connecté au premier code de point commun (162, 152) d'au moins un autre des éléments de réseau SS7 (160, 150).

9. Agencement de réseau (190) selon l'une quelconque des revendications 6 à 8, dans lequel les moyens de traitement, de suppression ou de modification comprennent des moyens pour :
- déterminer le SLC d'un message de gestion réseau MTP reçu ;
- si le SLC se rapporte à une liaison de signalisation n'aboutissant pas à l'un des au moins deux éléments de réseau SS7 (150, 160), envoyer le message à un autre des au moins deux éléments de réseau SS7 si le message n'a pas été reçu d'un autre des au moins deux éléments de réseau SS7 ou n'est pas passé par tous les autres des au moins deux éléments de réseau SS7, ou à titre d'alternative rejeter le message si le message a été reçu d'un autre des au moins deux éléments de réseau SS7 (150, 160) après être passé par tous les autres des au moins deux éléments de réseau SS7 ; sinon
- si le SLC se rapporte à une liaison de signalisation aboutissant à l'un des au moins deux éléments de réseau SS7, traiter le message au niveau de cet élément de réseau SS7 conformément aux procédures SS7 standard et renvoyer toutes réponses applicables.

10. Agencement de réseau (190) selon la revendication 9, dans lequel les au moins deux éléments de réseau SS7 (150, 160) comprennent en outre un moyen pour envoyer un message d'accusé de réception de transfert ou un message d'accusé de réception de transfert d'urgence en réponse à de quelconques messages d'ordre de transfert entrants si toutes les liaisons vers tous les autres des au moins deux éléments de réseau SS7 (150, 160) sont hors service.

11. Agencement de réseau (190) selon l'une quelconque des revendications 9 ou 10, dans lequel chacun des au moins deux éléments de réseau SS7 (150, 160) comprend en outre un moyen pour
- supprimer l'envoi de messages d'interdiction de transfert vers les autres éléments de réseau (104, 106) ; et
- mettre hors service toutes liaisons de signalisation vers lesdits autres éléments de réseau (104, 106) ;
si toutes les liaisons entre ledit un des au moins deux éléments de réseau SS7 et tous les autres des au moins deux éléments de réseau SS7 et toutes les liaisons entre ledit un des au moins deux éléments de réseau SS7 et le troisième élément de réseau sont hors service.

12. Agencement de réseau (190) selon l'une quelconque des revendications 6 à 11, dans lequel l'une des ou toutes les liaisons de signalisation (120A/B, 122A/B, 170, 180, 182) comprennent des liaisons TDM et/ou des liaisons ATM et/ou des liaisons M2UA et/ou des liaisons M2PA et/ou des liaisons M3UA classiques.

13. Point de Transfert de Signalisation (150) d'un réseau SS7, comprenant :
- un premier (152) et un deuxième (154) codes de points de signalisation, dans lequel le premier code de point de signalisation (152) est également un code de point de signalisation d'au moins un deuxième élément de réseau SS7 (160) et d'un troisième élément de réseau SS7 (102) ;
- au moins un ensemble de liaisons SS7 (170) vers le deuxième élément de réseau SS7 (160), ledit ensemble de liaisons SS7 (170) aboutissant au premier (152) ou au deuxième (154) code de point ;
- au moins un ensemble de liaisons SS7 (180) vers le troisième élément de réseau SS7 (102), ledit ensemble de liaisons SS7 (180) aboutissant au deuxième code de point (154) ;
- au moins une liaison SS7 (120A, 122A) vers les autres éléments de réseau SS7 (104, 106) ayant des codes de points de signalisation différents du premier code de point de signalisation, ladite liaison SS7 (120A, 122A) aboutissant au premier code de point (152) ;
- un moyen pour acheminer tous les messages de la partie utilisateur MTP reçus pour le premier code de point de signalisation vers le troisième élément de réseau (102) soit directement, soit par l'intermédiaire du deuxième élément de réseau SS7 (160) ;
- un moyen pour traiter tous les messages de gestion réseau MTP entrants de telle manière que le point de transfert de signalisation (150), le deuxième (160), et le troisième (102) éléments de réseau semblent être un élément de réseau unique ayant le premier code de point de signalisation ; et
- un moyen pour supprimer ou modifier les messages de gestion réseau MTP sortants qui se rapportent aux conditions opérationnelles du deuxième (160) ou du troisième (102) élément de réseau SS7 de telle manière que le point de transfert de signalisation (150), le deuxième (160), et le troisième (102) éléments de réseau semblent être un élément de réseau unique ayant le premier code de point de signalisation.

14. Point de Transfert de Signalisation (150) selon la revendication 13, dans lequel les moyens de traitement, de suppression ou de modification comprennent des moyens pour :
- déterminer le SLC d'un message de gestion réseau MTP reçu ;
- si le SLC se rapporte à une liaison de signalisation n'aboutissant pas au point de transfert de signalisation (150), acheminer le message au deuxième élément de réseau (150) si le message n'a pas été reçu du deuxième élément de réseau (150), ou à titre d'alternative rejeter le message si le message a été reçu du deuxième élément de réseau (150) ; sinon
- si le SLC se rapporte à une liaison de signalisation aboutissant au point de transfert de signalisation (150), traiter le message conformément aux procédures SS7 standard et renvoyer toutes réponses applicables.

15. Point de Transfert de Signalisation (150) selon la revendication 14, comprenant en outre un moyen pour envoyer un message d'accusé de réception de transfert ou un message d'accusé de réception de transfert d'urgence en réponse à de quelconques messages d'ordre de transfert entrants si toutes les liaisons vers le deuxième élément de réseau (160) sont hors service.

16. Point de Transfert de Signalisation (150) selon l'une quelconque des revendications 13 ou 14, comprenant en outre un moyen pour
- supprimer l'envoi de messages d'interdiction de transfert aux autres éléments de réseau (104, 106) ; et
- mettre hors service toutes liaisons de signalisation (120A, 122A) vers lesdits autres éléments de réseau (104, 106) ; si toutes les liaisons dans les ensembles de liaisons (170, 180) vers le deuxième (160) et le troisième (102) éléments de réseau sont hors service.

17. Point de Transfert de Signalisation (150) selon l'une quelconque des revendications 13 à 16, comprenant en outre un moyen pour une connexion à des liaisons SS7 (120A, 122A, 170, 180) comprennant des liaisons TDM et/ou des liaisons ATM et/ou des liaisons M2UA et/ou des liaisons M2PA et/ou des liaisons M3UA classiques.
